# EUROPÄISCHE PATENTSCHRIFT

(11) **EP 2 283 731 B1**
(45) Veröffentlichungstag und Bekanntmachung des Hinweises auf die Patenterteilung: **13.11.2013**
(21) Anmeldenummer: 10015003.6
(22) Anmeldetag: 06.07.2007
(51) Int. Cl.: A22C 13/00, B32B 27/32, B32B 27/08

(54) **Mehrschichtige flächen- oder schlauchförmige Nahrungsmittelhülle oder -folie**
Multi-layer flat or hose-shaped foodstuff container or film
Emballage ou feuille d'aliment plat ou cylindrique multicouches

(30) Priorität: 29.09.2006 DE 102006046483
(43) Veröffentlichungstag der Anmeldung: 16.02.2011
(62) Teilanmeldung aus: 07785930.4
(73) Patentinhaber: Kuhne Anlagenbau GmbH, 53757 St. Augustin/Menden (DE)
(72) Erfinder: Schiffmann, Jürgen, 53773 Hennef (DE)
(74) Vertreter: Kuhnen & Wacker

(56) Entgegenhaltungen:
- DE-A1- 10 227 580
- DE-A1- 10 254 172
- DE-U1- 20 220 753
- US-A1- 2003 180 487
- US-B1- 6 406 763

## Beschreibung

Die vorliegende Erfindung betrifft eine, insbesondere im Düsenblasverfahren hergestellte und im Tripple Bubble Verfahren biaxial verstreckte, flächen- oder schlauchförmige Nahrungsmittelhülle oder -folie für Lebensmittelverpackungen, wie beispielsweise Schrumpfbeutel, Siegelfolien oder dergleichen, nach dem Oberbegriff des Anspruchs 1.

In der Praxis werden derartige mehrschichtige schlauch- oder flächenförmige Verpackungsfolien bereits als 5- oder 7-schichtige Folie eingesetzt.

So beschreibt beispielsweise die EP 0 236 099 B2 eine als Verpackungssauerstoffsperrfilm bezeichnete, mehrschichtige, schlauchförmige Verpackungsfolie für Lebensmittel mit bis zu 7 Schichten. Nachteilig ist bei dieser beschriebenen Folie jedoch, dass die Außenschicht aus einem Polyolefin (kurz: PO) besteht, welches zwar die inneren Schichten gut vor Feuchtigkeit schützt, aber keine deutlich höhere Temperaturbeständigkeit gegenüber der Innenschicht (Siegelschicht) aufweist.

Die EP 0 476 836 B1 diskutiert eine 6-schichtige Verpackungsfolie, welche gegenüber der EP 0 236 099 B2 zwar eine temperaturbeständige Außenschicht aus PET enthält, die aus EVOH und PA bestehenden Kernschichten für die Sauerstoffbarriere und die mechanische Festigkeit jedoch nicht durch eine gesonderte, reine PO-Schicht vor Feuchtigkeit geschützt werden, da weder das PET noch der Haftvermittler (nachfolgend kurz: HV) diesen Ansprüchen an die Wasserdampfbarriere genügen.

Ferner führt das Fehlen einer äußeren PO-Schicht zu einer sehr starken Rollneigung (Curling) nach Außen.

Auch die EP 1 034 076 B1 diskutiert eine als heißschrumpffähige thermoplastische Mehrschichtfolie bezeichnete Verpackungsfolie mit einer aus PA bestehenden temperaturbeständiger Außenschicht. Hierbei handelt es sich jedoch lediglich um eine 5-schichtige Struktur, welche zudem ebenfalls keinerlei PO-Schicht als Wasserdampfbarriere von Außen aufweist. Daher kommt es hierbei erst recht zu sehr starker Rollneigung bei gleichzeitig stark beeinträchtigter Wasserdampfbarriere sowie stark beeinträchtigter Festigkeit, da sowohl das EVOH wie auch das PA der Feuchtigkeit schutzlos ausgesetzt sind.

Ferner zeigt die PCT/EP2004/051560, veröffentlicht als WO 2005/011978 A1 eine 5-schichtige Verpackungsfolie mit einer temperaturbeständigen Außenschicht aus PET und einer Kernschicht für Barriere aus EVOH. Aber auch hier ist keine Feuchtigkeitsbarriere von Außen vorgesehen. Darüber hinaus handelt es sich bei dem in der PCT/EP2004/051560 diskutierten Herstellungsverfahren um ein komplett anderes Herstellungsverfahren. Die in der PCT/EP2004/051560 beschriebenen Folien werden nämlich nicht im Blasfolienprozess mit biaxialer Verstreckung (Tripple-Bubble-Prozess) sondern im Flachfolienprozess mit biaxialer Verstreckung (Tenderframe-Prozess) hergestellt.

DE 102 27 580 A1 offenbart auch eine mehrschichtige Nahrungsmittelhülle mit einer zwischen zwei PA-Schichten eingebetteten EVOH-Schicht als Sauerstoffbarriere.

Dementsprechend ist es Aufgabe der vorliegenden Erfindung - unter Vermeidung der vorstehend diskutierten Nachteile - eine gattungsgemäße mehrschichtige flächen- oder schlauchförmige Nahrungsmittelhülle oder -folie derart weiterzubilden, dass eine ausreichend dichte Sauerstoffbarriere bei einer zugleich hohen Wasserdampfbarriere bei hervorragender mechanischer Festigkeit, ausgezeichneten optischen Eigenschaften, guter Weiterverarbeitbarkeit, hoher Temperaturbeständigkeit der Außenschicht und einer zufrieden stellenden Schrumpfrate zur Verfügung gestellt werden kann.

Diese Aufgabe und Aspekte werden durch die Merkmale der Ansprüche 1 und 2 gelöst.

Erfindungsgemäß wird hierbei eine mehrschichtige, insbesondere im Düsenblasverfahren hergestellte und im Tripple-Bubble-Verfahren biaxial vertreckte, flächen- oder schlauchförmige Nahrungsmittelhülle oder -folie für Lebensmittelverpackungen wie beispielsweise Schrumpffolien, Siegelfolien oder dergleichen, vorgeschlagen, die sich erstmals durch folgende, von außen nach innen gezählten Schichtaufbauten mit wenigstens sieben Schichten auszeichnet.

Dabei enthält die erste Schicht von außen als Schichtbestandteil PET, die zweite Schicht einen Haftvermittler, die dritte Schicht ein Ionomer, die vierte Schicht einen Haftvermittler, die fünfte Schicht ein PVA (Polyvinylalkohol) oder MXD6 (modifiziertes Polyamid), die sechste Schicht einen Haftvermittler, und die siebte Schicht von außen, die zugleich die innerste Schicht ist, ein Polyolefin vorzugsweise Polyethylen.

Das PVA oder MXD6 bildet hierbei in vorteilhafter Weise die gewünschte Sauerstoffbarriere. Das Ionomer ermöglicht die Sicherstellung der gewünschten mechanischen Eigenschaften. Durch das Polyester können hervorragende optische Eigenschaften wie Glanz und Transparenz sichergestellt sowie eine hohe Weiterverarbeitungsgeschwindigkeit (Taktzahlen) durch die hohe Temperaturbeständigkeit erzielt werden.

Mit dem PO wird ferner die benötigte Wasserdampfbarriere erreicht und es kann positiv auf die Siegelbarkeit der Innenschicht eingewirkt werden, d.h. es wird eine hohe Siegelnahtfestigkeit bei möglichst niedriger Siegeltemperatur erzielbar.

Die Polyolefine umfassen dabei in vorteilhafter Weise sowohl PE als auch EVA und EM(M)A im Sinne dieser Anmeldung sowie Mischungen von Polyolefinen als solchen als auch mit Ionomeren.

Weiterhin steht EVA gleichsam für EVA als auch für Mischungen von EVA mit Polymeren, Ionomeren oder EM(M)A. Die Haftvermittler (kurz HV) stehen für eine Klebeschicht. Unter EVOH sollen sowohl EVOH als auch Mischungen von EVOH mit anderen Polymeren verstanden werden.

Dabei wird in vorteilhafter Weise eine Nahrungsmittelhülle- oder folie für Lebensmittel-verpackungen geschaffen, mit der alternativ ein gezielt hoher Schrumpf von bis zu 60 % oder ein demgegenüber gezielt niedriger Schrumpf von bis zu 0% möglich ist.

Für Schrumpfbeutel oder dergleichen ist mit den erstmalig vorgeschlagenen Schichtaufbauten in vorteilhafter Weise ein besonders hoher Schrumpf erzielbar, der wenigstens 30 bis 70%, vorzugsweise wenigstens 40 bis 60% beträgt, gemessen bei einer Wassertemperatur von etwa 90°C.

Für Siegelfolien oder dergleichen ist mit den erstmalig vorgeschlagenen Schichtaufbauten in vorteilhafter Weise ein besonders niedriger Schrumpf erzielbar, der höchstens 0 - 30 %, vorzugsweise 2 - 5% beträgt, gemessen bei einer Wassertemperatur von etwa 90°C.

Für die bei Schrumpfbeuteln bzw. Siegelfolien vorzusehenden Siegelschichten auf der Innenseite kann bei den erstmalig vorgeschlagenen Schichtaufbauten vorteilhaft als Rohstoff beispielsweise ein Polyolefin, vorzugsweise mit LDPE, LLDPE, EVA, EM(M)A, Ionomeren oder POP oder Mischungen hiervon oder dergleichen vorgesehen werden.

Aufgrund der durch den Schichtbestandteil PVA oder MXD6 erzielten, besonders ausgeprägten Sauerstoffbarriere ist eine hervorragende Haltbarkeit der damit verpackten Lebensmittel über mehrere Wochen ohne jegliche Qualitätsminderung gewährleistet.

Dank der extrem gut ausgebildeten Sauerstoffbarriere steht mit der erfindungsgemäßen Nahrungsmittelhülle oder -folie zudem erstmals eine Lebensmittelverpackung zur Verfügung, mit der auch besonders luftempfindliche Güter selbst bei langen Lagerzeiten keiner farblichen Veränderung unterzogen sind oder gar Gefahr laufen, durch Eintritt von Sauerstoff zu altern oder ihren Geschmack oder ihr Aroma zu verändern.

Damit kann eine hervorragende Wasserdampfbarriere zur Verfügung gestellt werden, was insbesondere bei Fleisch oder anderen Lebensmitteln, die frischhaltebedürftig sind, entscheidend ist. Mit der erfindungsgemäßen Nahrungsmittelhülle oder -folie verpackte Lebensmittel bleiben deshalb besonders lange frisch.

Aufgrund der niedrigen Wasserdampfdurchlässigkeit bleiben die Gewichtsverluste beim Lagern der Lebensmittel und insbesondere beim Lagern von Fleisch besonders gering.

Die äußerste Schicht der erstmalig vorgeschlagenen Nahrungsmittelhülle oder -folie besteht zudem aus hochtemperaturbeständigen Rohstoffen wie PET, und bietet somit die Möglichkeit die Folien mit extrem hohen Temperaturen zu verschweißen, ohne dass die Folie mit den Schweißbalken verklebt. Hierdurch lassen sich höhere Taktzahlen auf den Schweißmaschinen erzielen. Darüber hinaus ist die Folie wesentlich unempfindlicher gegen äußerliche Beschädigungen und hat, wie für PET üblich, hervorragende optische Eigenschaften in Bezug auf Glanz und Transparenz. Ferner ist die Folie besonders gut beschrift- oder bedruckbar.

Weiter lässt sich die erfindungsgemäße Nahrungsmittelhülle oder -folie besonders gut mit entsprechenden Anlagen der selben Anmelderin herstellen und weiterverarbeiten.

Vorteilhafte Aspekte oder Weiterbildungen der Erfindung ergeben sich aus den Merkmalen der Unteransprüche.

So ist es bei einer bevorzugten Ausführungsform der erfindungsgemäßen Nahrungsmittelhülle oder -folie für Lebensmittelverpackungen vorgesehen, dass Schichten, die Polyethylen als Schichtbestandteil enthalten, alternativ auch Polypropylen, EVA (Ethyl-Vinyl-Alkohol), EM(M)A, Ionomere oder Mischungen von diesen oder dergleichen enthalten.

Weiterhin ist einer bevorzugten Ausführungsform vorgesehen, dass Schichten, die einen Haftvermittler enthalten, einen Haftvermittler aufweisen, der auf PE, EVA, EM(M)A oder einem Ionomer als Grundstoff basiert.

Gemäß einer weiter bevorzugten Ausführungsform ist vorgesehen, dass Schichten, die einen Haftvermittler als Bestandteil aufweisen, alternativ ein Gemisch aus Polyolefin und Haftvermittler oder ein Gemisch aus EVA und/oder EM(M)A und Haftvermittler enthalten.

Entsprechend einer weiteren bevorzugten Ausführung ist vorgesehen, dass Schichten die PVA oder MXD6 enthalten, alternativ Mischungen dieser Rohstoffe mit PA enthalten.

Nach einer weiter bevorzugten Ausführungsform ist vorgesehen, dass Schichten, die PET als Schichtbestandteil aufweisen, alternativ Polycaprolactam (PA6), Polyhexamethylenadipinamid (PA66), PA6/66, PA11, PA 12, oder Mischungen aus diesen Polyamiden oder dergleichen enthalten

Eine ebenfalls weiter bevorzugte Ausführungsform sieht vor, dass die äußere Schicht, welche PET als Schichtbestandteil enthält, alternativ PA, PS oder PC aufweist.

Zusätzlich sehen weitere bevorzugte Ausführungsformen vor, dass die äußere Schicht, welche PET enthält, alternativ COC, PP, bzw. HDPE oder Mischungen dieser Rohstoffe mit Polyolefin aufweist.

Weiter bevorzugte Ausführungsformen sehen schließlich vor, daß die flächen- oder schlauchförmige Nahrungsmittelhülle oder -folie als Lebensmittelverpackung in Form eines Schrumpfbeutels oder einer Siegelfolie ausgestaltet ist

Mit der vorliegenden Erfindung wird damit erstmals eine flächen- oder schlauchförmige Nahrungsmittelhülle oder -folie mit einem wenigstens siebenschichtigen Schichtaufbau vorgeschlagen, welche eine EVOH-Schicht als Sauerstoffbarriere besitzt, und bei der die Außenschicht durch ein hochtemperaturbeständiges Material wie PET gebildet wird, welches neben den hervorragenden optischen Eigenschaften auch deutlich höhere Weiterverarbeitungsgeschwindigkeiten (Taktzahlen) ermöglicht.

## Patentansprüche

1. Mehrschichtige, insbesondere im Düsenblasverfahren hergestellte und im Tripple Bubble Verfahren biaxial verstreckte, flächen- oder schlauchförmige Nahrungsmittelhülle oder -folie für Lebensmittelverpackungen, **gekennzeichnet durch** folgenden, von außen nach innen gezählten Schichtaufbau, mit wenigstens sieben Schichten, wobei:
- eine erste Schicht von außen als Schichtbestandteil PET,
- eine zweite Schicht von außen als Schichtbestandteil einen Haftvermittler,
- eine dritte Schicht von außen als Schichtbestandteil ein Ionomer,
- eine vierte Schicht von außen als Schichtbestandteil Haftvermittler,
- eine fünfte Schicht von außen als Schichtbestandteil PVA (Polyvinylalkohol),
- eine sechste Schicht von außen als Schichtbestandteil Haftvermittler,
- eine siebte Schicht von außen als Schichtbestandteil ein Polyolefin,
vorzugsweise Polyethylen,
enthält.

2. Mehrschichtige, insbesondere im Düsenblasverfahren hergestellte und im Tripple Bubble Verfahren biaxial verstreckte, flächen- oder schlauchförmige Nahrungsmittelhülle oder -folie für Lebensmittelverpackungen, **gekennzeichnet durch** folgenden, von außen nach innen gezählten Schichtaufbau, mit wenigstens sieben Schichten, wobei:
- eine erste Schicht von außen als Schichtbestandteil PET,
- eine zweite Schicht von außen als Schichtbestandteil einen Haftvermittler,
- eine dritte Schicht von außen als Schichtbestandteil ein Ionomer,
- eine vierte Schicht von außen als Schichtbestandteil Haftvermittler,
- eine fünfte Schicht von außen als Schichtbestandteil MXD6 (modifiziertes Polyamid 6),
- eine sechste Schicht von außen als Schichtbestandteil Haftvermittler,
- eine siebte Schicht von außen als Schichtbestandteil ein Polyolefin,
vorzugsweise Polyethylen,
enthält.

3. Nahrungsmittelhülle oder -folie nach einem der Ansprüche 1 bis 2, **dadurch gekennzeichnet**, das Schichten, die PVA oder MXD6 aufweisen, alternativ Mischungen dieser Rohstoffe mit Polyamid enthalten.

4. Nahrungsmittelhülle oder -folie nach einem der Ansprüche 1 bis 3, **dadurch gekennzeichnet, dass** Schichten, die ein Polyolefin, vorzugsweise Polyethylen, als Schichtbestandteil enthalten, alternativ auch weitere Polyolefine, Polypropylen, EVA, EM(M)A, Ionomere oder Mischungen von diesen oder dergleichen enthalten.

5. Nahrungsmittelhülle oder -folie nach einem der Ansprüche 1 bis 4, **dadurch gekennzeichnet, dass** Schichten, die einen Haftvermittler enthalten, einen Haftvermittler aufweisen, der auf PE, PP, EVA, EM(M)A oder einem Ionomer als Grundstoff basiert.

6. Nahrungsmittelhülle oder -folie nach einem der Ansprüche 1 bis 5, **dadurch gekennzeichnet, dass** Schichten, die einen Haftvermittler aufweisen, alternativ ein Gemisch aus Polyolefin und Haftvermittler oder ein Gemisch aus EVA und/oder EM(M)A und Haftvermittler oder Ionomer und Haftvermittler, oder unterschiedliche Haftvermittler beziehungsweise Mischungen davon in den einzelnen Schichten enthalten.

7. Nahrungsmittelhülle oder -folie nach einem der Ansprüche 1 bis 6, **dadurch gekennzeichnet, dass** Schichten, die PET als Schichtbestandteil aufweisen, alternativ Polycaprolactam (PA6), Polyhexamethylenadipinamid (PA66), PA6/66, PA11, PA 12, oder Mischungen aus diesen Polyamiden oder dergleichen enthalten.

8. Nahrungsmittelhülle oder -folie nach einem der Ansprüche 1 bis 7, **dadurch gekennzeichnet, dass** Schichten, die PET als Schichtbestandteil aufweisen, alternativ PS (Polystyrol) enthalten.

9. Nahrungsmittelhülle oder -folie nach einem der Ansprüche 1 bis 8, **dadurch gekennzeichnet, dass** Schichten, die PET als Schichtbestandteil aufweisen, alternativ COC oder eine Mischung aus COC und einem Polyolefin enthalten.

10. Nahrungsmittelhülle oder -folie nach einem der Ansprüche 1 bis 9, **dadurch gekennzeichnet, dass** Schichten, die PET als Schichtbestandteil aufweisen, alternativ ein Polyolefin, vorzugsweise PP oder HDPE oder Mischungen von verschiedenen Polyolefinen enthalten.

11. Nahrungsmittelhülle oder -folie nach einem der Ansprüche 1 bis 10, **dadurch gekennzeichnet, dass** Schichten, die PET als Schichtbestandteil aufweisen, alternativ PC (Polycarbonat) enthalten.

12. Nahrungsmittelhülle oder -folie nach einem der Ansprüche 1 bis 11, **dadurch gekennzeichnet, daß** diese als Lebensmittelverpackung in Form eines Schrumpfbeutels oder einer Siegelfolie ausgestaltet ist.

## Claims

1. A multilayered two-dimensional or tubular food casing or food film for food packagings which is in particular produced by the nozzle blown extrusion process and biaxially oriented by the triple-bubble process, **characterized by** the following laminated structure including at least seven layers that are counted from the outside to the inside, wherein:
- a first layer from the outside contains PET as a layer component,
- a second layer from the outside contains an adhesion promoter as a layer component,
- a third layer from the outside contains an ionomer as a layer component,
- a fourth layer from the outside contains adhesion promoter as a layer component,
- a fifth layer from the outside contains PVA (polyvinyl alcohol) as a layer component,
- a sixth layer from the outside contains adhesion promoter as a layer component,
- a seventh layer from the outside contains a polyolefin, preferably polyethylene, as a layer component.

2. A multilayered two-dimensional or tubular food casing or food film for food
packagings which is in particular produced by the nozzle blown extrusion process and biaxially oriented by the triple-bubble process, **characterized by**
the following laminated structure including at least seven layers that are counted from the outside to the inside, wherein:
- a first layer from the outside contains PET as a layer component,
- a second layer from the outside contains an adhesion promoter as a layer component,
- a third layer from the outside contains an ionomer as a layer component,
- a fourth layer from the outside contains adhesion promoter as a layer component,
- a fifth layer from the outside contains MXD6 (modified polyamide 6) as a layer component,
- a sixth layer from the outside contains adhesion promoter as a layer component,
- a seventh layer from the outside contains a polyolefin, preferably polyethylene, as a layer component.

3. The food casing or food film according to any one of claims 1 to 2, **characterized in that** layers which include PVA or MXD6 alternatively contain blends of these starting materials with PA.

4. The food casing or food film according to any one of claims 1 to 3, **characterized in that** layers which contain a polyolefin, preferably polyethylene, as a layer component alternatively also contain further polyolefins, polypropylene, EVA, EM(M)A, ionomers or blends of these, or the like.

5. The food casing or food film according to any one of claims 1 to 4, **characterized in that** layers which contain an adhesion promoter include an adhesion promoter on the basis of PE, PP, EVA, EM(M)A or of an ionomer as a base material.

6. The food casing or food film according to any one of claims 1 to 5, **characterized in that** layers which include an adhesion promoter alternatively contain a blend of polyolefin and adhesion promoter or a blend of EVA and/or EM(M)A and adhesion promoter or ionomer and adhesion promoter, or various adhesion promoters or blends thereof, respectively, in the single layers.

7. The food casing or food film according to any one of claims 1 to 6, **characterized in that** layers which include PET as a layer component alternatively contain polycaprolactame (PA6), polyhexamethylene adipinamide (PA66), PA6/66, PA11, PA12, or blends of these polyamides or
the like.

8. The food casing or food film according to any one of claims 1 to 7, **characterized in that** layers which include PET as a layer component alternatively contain PS (polystyrene).

9. The food casing or food film according to any one of claims 1 to 8, **characterized in that** layers which include PET as a layer component alternatively contain COC or a blend of COC and a polyolefin.

10. The food casing or food film according to any one of claims 1 to 9, **characterized in that** layers which include PET as a layer component alternatively contain a polyolefin, preferably PP or HDPE, or blends of different polyolefins.

11. The food casing or food film according to any one of claims 1 to 10, **characterized in that** layers which include PET as a layer component alternatively contain PC (polycarbonate).

12. The food casing or food film according to any one of claims 1 to 11, **characterized in that** it is fashioned as a food packaging having the form of a shrink bag or a sealable film.

## Revendications

1. Enveloppe ou film pour produits alimentaires multicouche, de forme planaire ou tubulaire, fabriqué(e) en particulier lors d'un procédé de soufflage par tuyères et étiré(e) de façon biaxiale lors d'un procédé à bulle triple, destiné(e) à des emballages pour produits alimentaires, caractérisé(e) par la structure suivante de couches comprenant au moins sept couches répertoriées de l'extérieur vers l'intérieur, sachant que :
- une première couche en partant de l'extérieur contient comme composant de couche du PET ;
- une deuxième couche en partant de l'extérieur contient comme composant de couche un agent d'accrochage ;
- une troisième couche en partant de l'extérieur contient comme composant de couche un ionomère ;
- une quatrième couche en partant de l'extérieur contient comme composant de couche un agent d'accrochage ;
- une cinquième couche en partant de l'extérieur contient comme composant de couche du PVAL (alcool polyvinylique) ;
- une sixième couche en partant de l'extérieur contient comme composant de couche un agent d'accrochage ;
- une septième couche en partant de l'extérieur contient comme composant de couche une polyoléfine, de préférence du polyéthylène.

2. Enveloppe ou film pour produits alimentaires multicouche, de forme planaire ou tubulaire, fabriqué(e) en particulier lors d'un procédé de soufflage par tuyères et étiré(e) de façon biaxiale lors d'un procédé à bulle triple, destiné(e) à des emballages pour produits alimentaires, caractérisé(e) par la structure suivante de couches comprenant au moins sept couches répertoriées de l'extérieur vers l'intérieur, sachant que :
- une première couche en partant de l'extérieur contient comme composant de couche du PET ;
- une deuxième couche en partant de l'extérieur contient comme composant de couche un agent d'accrochage ;
- une troisième couche en partant de l'extérieur contient comme composant de couche un ionomère ;
- une quatrième couche en partant de l'extérieur contient comme composant de couche un agent d'accrochage ;
- une cinquième couche en partant de l'extérieur contient comme composant de couche du MXD6 (du polyamide 6 modifié) ;
- une sixième couche en partant de l'extérieur contient comme composant de couche un agent d'accrochage ;
- une septième couche en partant de l'extérieur contient comme composant de couche une polyoléfine, de préférence du polyéthylène.

3. Enveloppe ou film pour produits alimentaires selon l'une quelconque des revendications 1 à 2, caractérisé(e) en ce que des couches, qui présentent du PVAL ou du MXD6, contiennent en variante des mélanges de ces matières premières avec du polyamide.

4. Enveloppe ou film pour produits alimentaires selon l'une quelconque des revendications 1 à 3, caractérisé(e) en ce que des couches, qui contiennent comme composant de couche une polyoléfine, de préférence du polyéthylène, contiennent en variante également d'autres polyoléfines, du polypropylène, de l'EVA, de l'EM(M)A, des ionomères ou des mélanges de ces derniers ou similaires.

5. Enveloppe ou film pour produits alimentaires selon l'une quelconque des revendications 1 à 4, caractérisé(e) en ce que des couches, qui contiennent un agent d'accrochage, présentent un agent d'accrochage ayant pour substance de base du PE, du PP, de l'EVA, de l'EM(M)A ou un ionomère.

6. Enveloppe ou film pour produits alimentaires selon l'une quelconque des revendications 1 ou 5, caractérisé(e) en ce que des couches, qui présentent un agent d'accrochage, contiennent en variante un mélange de polyoléfine et d'agent d'accrochage ou un mélange d'EVA et/ou d'EM(M)A et d'agent d'accrochage ou d'ionomère et d'agent d'accrochage, ou divers agents d'accrochage ou des mélanges de ces derniers dans les différentes couches.

7. Enveloppe ou film pour produits alimentaires selon l'une quelconque des revendications 1 à 6, caractérisé(e) en ce que des couches, qui présentent comme composant de couche du PET, contiennent en variante du polycaprolactame (PA6), du polyhexaméthylène adipamide (PA66), du PA6/66, du PA11, du PA12, ou des mélanges desdits polyamides ou similaires.

8. Enveloppe ou film pour produits alimentaires selon l'une quelconque des revendications 1 à 7, caractérisé(e) en ce que des couches, qui présentent comme composant de couche du PET, contiennent en variante du PS (polystyrène).

9. Enveloppe ou film pour produits alimentaires selon l'une quelconque des revendications 1 à 8, caractérisé(e) en ce que des couches, qui présentent comme composant de couche du PET, contiennent en variante du COC ou un mélange de COC et d'une polyoléfine.

10. Enveloppe ou film pour produits alimentaires selon l'une quelconque des revendications 1 à 9, caractérisé(e) en ce que des couches, qui présentent comme composant de couche du PET, contiennent en variante une polyoléfine, de préférence du PP ou du HDPE ou des mélanges de diverses polyoléfines.

11. Enveloppe ou film pour produits alimentaires selon l'une quelconque des revendications 1 à 10, caractérisé(e) en ce que des couches, qui présentent comme composant de couche du PET, contiennent en variante du PC (polycarbonate).

12. Enveloppe ou film pour produits alimentaires selon l'une quelconque des revendications 1 à 11, caractérisé(e) en ce qu'ils se présentent en tant qu'emballage pour produits alimentaires sous la forme d'une poche rétractable ou d'un film de scellement.
